# EUROPÄISCHE PATENTANMELDUNG

(11) **EP 4 557 150 A1**
(43) Veröffentlichungstag der Anmeldung: **21.05.2025**
(21) Anmeldenummer: 23210932.2
(22) Anmeldetag: 20.11.2023
(51) Int. Cl.: G06F 21/64, H04L 9/40

(54) **ERSTELLEN EINES VERTRAUENSWÜRDIGEN DATENPAKETS**

(71) Anmelder: Siemens Aktiengesellschaft, 80333 München (DE)
(72) Erfinder: Falk, Rainer, 85435 Erding (DE)
(74) Vertreter: Siemens Patent Attorneys

(57) **Zusammenfassung**

Die Erfindung betrifft ein Verfahren zum Speichern eines vertrauenswürdigen Datenpakets (32, 32B), mit den Schritten:
- Ein Empfangen (S1) von einer Datenquelle (1) von:
∘ mindestens einer Dateneinheit (32),
∘ mindestens einer Integritätsinformation (32A) der Datenquelle (1), welche der mindestens einen Dateneinheit (32) zugeordnet ist,

- ein Ermitteln (S2) einer Vertrauenswürdigkeitsinformation (32B) in Abhängigkeit der mindestens einen Integritätsinformation (32A),
- ein Erstellen (S3) des vertrauenswürdigen Datenpakets (32, 32B) durch ein Zuordnen der Vertrauenswürdigkeitsinformation (32B) zu der mindestens einen Dateneinheit (32), und
- ein Speichern (S4) des vertrauenswürdigen Datenpakets (32, 32B).

Außerdem betrifft die Erfindung ein Computerprogrammprodukt, ein computerlesbares Medium und ein übergeordnetes System.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die Erfindung betrifft ein Verfahren zum Speichern eines vertrauenswürdigen Datenpakets. Außerdem betrifft die Erfindung ein Computerprogrammprodukt, ein computerlesbares Medium und ein übergeordnetes System.

### Beschreibung des Stands der Technik

Für Windows ist bekannt, dass ein Zonen-Identifier als Meta-Information zu einer Datei vorliegen kann, der den Ursprung der Datei anzeigt (Local machine, Local intranet, Trusted sites, Internet, Restricted sites).

Eine Applikation kann abhängig von dieser Information unterschiedliche Security-Optionen anwenden. Hinter dieser Klassifikation verbirgt sich implizit ein auf Netzwerksegmentierung basierendes Security-Konzept. Das Sicherheitsniveau ergibt sich aus dem Netzwerkbereich, in dem sich die Quelle befindet, von der eine Datei geladen wurde. Bei einem Zero-Trust-Security-Konzept dient die Unterscheidung des Netzwerkbereichs (Intranet, Internet) dagegen nicht mehr als entscheidendes Kriterium. Stattdessen wird bei einem Zugriff durch einen Nutzer die Zulässigkeit nicht nur abhängig von der Nutzerzugriffsberechtigung geprüft, sondern anhand weiterer Kriterien, z.B. ob das Gerät definierte Sicherheitsvorgaben erfüllt.

Wie erwähnt ist bekannt, dass eine Datei eine zugehörige Information umfasst, insbesondere dass sie vom Internet geladen wurde. Davon abhängig kann eine Applikation, z.B. ein Texteditor, beim Öffnen der Datei Sicherheitseinstellungen auswählen (z.B. einen Nur-Lese-Modus aktivieren). Dazu wird einen Zonen-Identifier in einem "Alternative Stream" der Datei abgelegt. Anhand des Zonen-Identifiers können die folgenden Kategorien unterschieden werden: Local machine, Local intranet, Trusted sites, Internet, Restricted sites.

Es ist weiterhin bekannt, dass eine Security-Einstufung (z.B. offen, intern, vertraulich, geheim) als Meta-Information in einer Datei enthalten ist (z.B. bei Data Loss Prevention) oder einer Datei zugeordnet sein kann (z.B. SELinux).

Bei einem Zero-Trust-Security-Konzept ist bekannt, dass beim Zugriff eines Nutzers auf einen Service auch die Geräte-Compliance-Information des vom Nutzer verwendeten Geräts geprüft wird.

Weiterhin sind Datenräume bekannt, um Daten über Organisationsgrenzen hinweg auszutauschen.

Vom International Data Space IDS (früher Industrial Data Space) ist bekannt, dass bei der Datenübertragung zwischen zwei IDS-Konnektoren ein signiertes Token die Vertrauenswürdigkeit eines IDS-Konnektors bestätigt ("The token is presented by each subsequent outgoing communication message of the Connector, so that also the communicating Connectors have a means to verify the trustfulness of their communication partners at any time. "). Die Token-Information wird aber nur zum Schutz der Datenübertragung zwischen IDS-Konnektoren verwendet. Die implizite Annahme dabei ist, dass eine Datenübertragung nur zwischen hinreichend vertrauenswürdigen IDS-Konnektoren erfolgt, d.h. dass empfangene Daten grundsätzlich aus einer hinreichend vertrauenswürdigen Quelle stammen.

Bei einem AI-Lernen ist ein sogenanntes "Curriculum Learning" bekannt, bei dem die Reihenfolge der Lerndaten abhängig von ihrem Inhalt ermittelt wird (siehe z.B. Petru Soviany, Radu Tudor Ionescu, Paolo Rota, Nicu Sebe, "Curriculum Learning: A Survey"). Dabei kann z.B. eine Lernstrategie umgesetzt werden, bei der zuerst die Basis-Fälle (Grundlagen) durch ein AI-Modell angelernt werden, bevor die Spezialfälle angelernt werden.

Es ist ein digitales Watermarking von Daten bekannt. Darunter wird verstanden, dass in den Daten eine Zusatzinformation eingebettet wird, z.B. in Rauschsignalanteilen der Daten (z.B. in Audiodaten, Bilddaten oder Videodaten).

Die Aufgabe der Erfindung besteht darin, eine Lösung für eine verbesserte Datenübertragung in Kommunikationsnetzwerken bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Speichern eines vertrauenswürdigen Datenpakets,
mit den Schritten:
- Ein Empfangen (insbesondere ein Laden und/oder ein Abfragen) von einer Datenquelle von:
   o mindestens einer Dateneinheit (oder mehrerer Dateneinheiten, auch als Daten bezeichenbar),
   o mindestens einer Integritätsinformation der Datenquelle, welche der mindestens einen Dateneinheit zugeordnet ist,
- ein Ermitteln einer Vertrauenswürdigkeitsinformation in Abhängigkeit der mindestens einen Integritätsinformation, (insbesondere direkt oder indirekt (mit Zwischenschritt) aus der Integritätsinformation)
- ein Erstellen des vertrauenswürdigen Datenpakets durch ein Zuordnen der Vertrauenswürdigkeitsinformation zu der mindestens einen Dateneinheit (insbesondere durch ein Verknüpfen der Vertrauenswürdigkeitsinformation und der mindestens einen Dateneinheit), und
- ein Speichern des vertrauenswürdigen Datenpakets.

Die vorliegende Erfindung schlägt somit insbesondere vor, bei einer Datenübertragung, insbesondere bei (d.h. während) der Übertragung einer Datei, eine Vertrauenswürdigkeitsinformation der Datenquelle zu ermitteln und diese den empfangenen und gespeicherten Daten bzw. der empfangenen und gespeicherten Datei zugeordnet und/oder als Teil davon (d.h. im Dateisystem, als Attribut der Datei oder als alternative Stream der Datei, oder in den Daten selbst eingebettet in Form eines digitalen Wasserzeichens) zu speichern.

Die mindestens eine Integritätsinformation der Datenquelle ist der mindestens einen Dateneinheit zugeordnet. In einer Ausführungsform ist dies dadurch realisiert, dass die Dateneinheit über eine HTTPS-geladen wird (z.B. PDF-Datei) und die Integritätsinformation der Datenquelle der Dateneinheit zugeordnet ist, da sie von der gleichen Datenquelle geladen wird wie die Dateneinheit (über die gleiche HTTPS-Verbindung oder über eine zweite HTTPS-Verbindung zu der gleichen Datenquelle) .

Die mindestens eine Dateneinheit und die mindestens eine Integritätsinformation sind alternativ Teil eines Rohdatenpaketes, wodurch die mindestens eine Integritätsinformation der mindestens einen Dateneinheit zugeordnet ist. Das Rohdatenpaket kann beispielsweise als eine XML-Datenstruktur, als eine JSON-Datenstruktur, als eine Archivdatei (z.B. ZIP, 7z) ausgestaltet sein. Ebenso ist es möglich, dass ein Rohdatenpakt derart ausgestaltet ist, dass dessen Elemente, d.h. insbesondere die mindestens eine Dateneinheit und die mindestens eine Integritätsinformation der Datenquelle, gemeinsam übertragen werden, beispielsweise über die gleiche Kommunikationsverbindung (z.B. eine TLS, DTLS, HTTP, HTTPS, QUIC Kommunikationsverbindung) oder über zwei kryptographisch gebundene Kommunikationsverbindungen (z.B. zwei TLS-Kommunikationsverbindung, die mittels eines kryptographischen Credentials kryptographisch gebunden sind, beispielsweise mittels einer TLS Session Resumption oder durch Nutzung des gleichen Authentisierungscredentials zum Verbindungsaufbau).

Die mindestens eine Integritätsinformation der Datenquelle ist insbesondere ermittelt:
- von einem Runtime-Health-Check-Komponente des Datenquellengeräts, z.B. zur wiederholten Integritätsprüfung der Firmware und der ausgeführten Software des Ursprungsknotens zur Laufzeit, und/oder
- durch eine Root of Trust for Measurement des Datenquellengeräts, die z.B. beim Gerätehochlauf (Booten) eine Geräteintegritätsinformation ermittelt (z.B. für ein Trusted Platform Module des Ursprungsknoten, d.h. der Datenquelle) .

Die Integritätsinformation der Datenquelle kann kryptographisch geschützt sein, beispielsweise durch eine kryptographische Prüfsumme, eine digitale Signatur, eine Gruppensignatur oder durch einen Nachrichtenauthentisierungscode. Die Integritätsinformation der Datenquelle kann eine kryptographisch geschützte Attestierung sein, die von einem Attestierungsmodul der Datenquelle gebildet wird. Das Attestierungsmodul kann beispielsweise als hardwarebasiertes Sicherheitselement oder als eine vertrauenswürdige Ausführungsumgebung (trusted execution environment) eines Prozessors gebildet sein. Das Attestierungsmodul kann weiterhin die Integritätsinformation der Datenquelle manipulationsgeschützt verwalten, d.h. speichern und aktualisieren.

Die Datenquelle kann beispielsweise ein Dateiserver, ein Fileserver, ein Web-Server, ein PubSub-Server, ein Content Distribution Server, ein Proxy Server oder eine Datenbank sein. In einer Variante können mehrere Datenquellen ermittelt werden, von denen die Dateneinheit geladen wird, z.B. ein Web-Server (HHTP-Server) und ein Proxy-Server (HTTP Proxy). In diesem Fall können mehrere Integritätsinformationen ermittelt werden, die jeweils einer der Datenquellen zugeordnet sind. Beim Erstellen des vertrauenswürdigen Datenpakets können diesen diese mehreren Vertrauenswürdigkeitsinformation zugeordnet werden.

Ein Element einer Zero Trust Architektur besteht darin, dass bei einem Zugriff durch einen Nutzer nicht nur der Nutzer selbst authentisiert wird und seine Zugriffsberechtigung überprüft wird, sondern dass auch die Vertrauenswürdigkeit des vom ihm verwendeten Geräts überprüft wird. Diese Überprüfung erfolgt beim Zugriff auf einen Dienst oder eine Applikation. Ein Aspekt der Erfindung besteht darin, Dateien eine Vertrauenswürdigkeitsinformation zuzuordnen. Dadurch kann auch bei einer Zero-Trust-Security-Strategie Dateien eine Vertrauenswürdigkeitsinformation zugeordnet werden. Weiterhin wird dadurch eine vertrauenswürdigere Nutzung von Daten unterstützt, die über Organisationsgrenzen hinweg geteilt werden.

Die Erfindung bietet den Vorteil, dass die Information zur Vertrauenswürdigkeit einer Datei nicht wie heute bei Windows-Systemen auf der Security-Zone (Internet, Intranet, ...) basiert, d.h. dem Netzwerkbereich, von der die Datei geladen würde, sondern auf der expliziten Vertrauenswürdigkeitsbewertung der Datenquelle durch den Empfänger. Dadurch wird das Zero-Trust-Security-Konzept auf die Vertrauenswürdigkeitsbewertung geladener Dateien übertragen. Die Information wird nicht, wie heute bei Zero Trust bekannt, bei einem Zugriff auf einen Service oder eine Applikation geprüft, sondern sie liegt nach erfolgter Datenübertragung vor. Dadurch kann diese Vertrauenswürdigkeitsinformation bei einer Weiterbearbeitung der gespeicherten Daten auch zu einem späteren Zeitpunkt ausgewertet werden.

Weiterhin kann ausgewertet werden, ob eine Datei von einem Gerät geladen wurde, das bei der Dateiübertragung integer war (als compliant geltendes managed Device, Device Integrity Attestation) . Auch kann ausgewertet werden, ob sich das Gerät bei der Dateiübertragung, mit starken kryptographischen Verfahren authentisiert hat. Eine solche Information ist beispielsweise bei einer Migration zu Post-Quantum-Kryptographie nützlich, da erkannt werden kann, ob eine Datei PQ-sicher geladen wurde.

In einer Weiterbildung der Erfindung ist die Datenquelle ausgebildet als:
- ein Sender,
- ein Ursprungsknoten (auch als Source Node bezeichenbar),
- ein Gerät als Ganzes,
- einen Teilbereich eines Geräts,
- eine geschützte Ausführungsumgebung (insbesondere ARM TrustZone, Intel SGX, Confidential Computing),
- ein Service, insbesondere ein Cloud-Service und/oder ein Web-Service,
- eine virtuelle Maschine und/oder
- ein Container.

In einer weiteren Weiterbildung der Erfindung ist der mindestens einen Dateneinheit außerdem zugeordnet:
- eine Authentisierung eines Senders der mindestens einen Dateneinheit,
- eine Authentisierung der Datenquelle,
- ein Authentisierungszertifikat, insbesondere zu einer Cipher Suite eines verwendeten Übertragungskanals,
- ein eine Authentisierung eines der Datenquelle übergeordneten Systems, insbesondere übergeordneten Geräts,
- mindestens ein Dateiattribut und/oder
- eine Zugriffsberechtigung.

Die nach dem erfindungsgemäßen Verfahren empfangene Dateneinheit und deren zugeordnete Merkmale werden von der Datenquelle insbesondere von einem Geräte-Directory-System oder von einem Geräte-Management-System bei der Übertragung der Daten abgefragt.

Entsprechend werden die empfangene Dateneinheit und deren zugeordnete Merkmale insbesondere bei dem Erstellen des vertrauenswürdigen Datenpakets dem vertrauenswürdigen Datenpakets zugeordnet.

In einer weiteren Weiterbildung der Erfindung ist die mindestens eine Dateneinheit ausgebildet als:
- mindestens eine Datei,
- Lerndaten für eine künstliche Intelligenz,
- Testdaten für eine künstliche Intelligenz,
- eine Softwaredatei,
- ein Softwarepaket,
- Videodaten,
- Archivdaten, insbesondere ZIP-Daten,
- Bilddaten oder
- Konstruktionsdaten,
- Projektierungsdaten,
- Abrechnungsdaten und/oder
- Verbrauchsdaten.

Weist die mindestens eine Dateneinheit mehrere Dateneinheiten auf, d.h. mindestens zwei Dateneinheiten, so ist sie auch als Daten bezeichenbar.

In einer weiteren Weiterbildung der Erfindung ist die mindestens eine Integritätsinformation ausgebildet als:
- Eine Geräteintegritätsinformation,
- ein Integritätsinformation einer Firmware, Software und/oder Hardware der Datenquelle und/oder
- eine kryptographisch geschützte Attestierung.

Die mindestens eine Integritätsinformation ist weiterhin insbesondere ausgebildet als:
- Eine Information, dass die Datenquelle kryptographisch authentisiert ist. Weiterhin kann die authentisierte Identität oder das zur Authentisierung verwendete Credential, z.B. das Authentisierungszertifikat oder der öffentliche Authentisierungsschlüssel der Datenquelle, verwendet werden. Weiterhin kann eine Information zu den verwendeten kryptographischen Algorithmen und zur Schlüssellänge, d.h. der bei der Datenübertragung verwendeten Cipher Suite, verwendet werden. Dadurch liegt beispielsweise eine Information vor, ob eine Post-Quantum-sichere kryptographische Cipher Suite bei der Datenübertragung zur Anwendung kam. Weiterhin kann das Wurzelzertifikat verwendet werden, das zur Validierung des Authentisierungszertifikats verwendet wurde, oder es kann der gesamte Zertifikatspfad des Authentisierungszertifikats gespeichert werden.
- Eine Information zur Integrität der Datenquelle (Device Integrity, Integrität einer Software-Applikation). Diese kann durch eine kryptographisch geschützte Attestierung bestätigt sein (z.B. eine TPM-Attestierung oder eine Google Play Integrity-Attestierung oder eine SGX-Attestierung) .
- Eine Information zur Security-Compliance der Datenquelle (z.B. Patch-Status aktuell, Virus-Scanner vorhanden und aktuell).
- Eine Information zum Schutzniveau der Datenquelle (z.B. ob es sich um eine Confidential-Computing-Enklave handelt oder um ein Trusted Execution Environment oder um ein offenes Compute-System mit einem auf Nutzerebene zugänglichen Betriebssystem, z.B. Command Line Access, oder um ein embedded Device mit fest durch dessen Firmware definierter Funktionalität).
- Eine Information, ob die Datenquelle durch ein Gerätemanagementsystem verwaltet ist, d.h. dass das Gerät durch ein Enterprise-Device-Management-System verwaltet wird. Weiterhin kann eine Information verwendet werden, durch welches Enterprise-Management-System das Gerät verwaltet wird, und ob das Gerät als compliant eingestuft wird, d.h. ob es die definierte Device-Compliance-Policy erfüllt.
- Eine Information, ob die Datenquelle über einen Tamper-Schutz zum Verhindern (tamper detection) oder zum Erkennen physikalischer Manipulationen (tamper response) verfügt, oder ob sie in einer physikalisch zugangsgeschützten Umgebung installiert ist (z.B. verschlossenes, alarm-überwachtes Rack oder Server-Raum). Eine solche Information kann z.B. von einem Gerätemanagementsystem oder von einem Geräte-Verzeichnisdienst (Directory Service) abgefragt werden.

In einer weiteren Weiterbildung der Erfindung erfolgt das Ermitteln der Vertrauenswürdigkeitsinformation durch eine regelbasierte Analyse der mindestens einen Integritätsinformation.

In einer weiteren Weiterbildung der Erfindung umfasst das erfindungsgemäße Verfahren den weiteren Schritt:
- Ein Ermitteln von mindestens zwei vorläufigen Vertrauenswürdigkeitsinformationen aus der mindestens einen Integritätsinformation,
   wobei das Erstellen der Vertrauenswürdigkeitsinformation basierend auf den mindestens zwei vorläufigen Vertrauenswürdigkeitsinformationen erfolgt.

In dieser Variante erfolgt während des Empfangen (insbesondere Laden und/oder Abfragen) der mindestens einen Dateneinheit ein mehrfaches Ermitteln einer vorläufigen Vertrauenswürdigkeitsinformation (aus der Integritätsinformation der Datenquelle) .

Dabei können mehrere Integritätsinformationen der Datenquelle und/oder mehrere ermittelte vorläufige Vertrauenswürdigkeitsinformationen auf Übereinstimmung geprüft werden, bevor daraus die Vertrauenswürdigkeitsinformation ermittelt wird und insbesondere in einem erweiterten Attribut des vertrauenswürdigen Datenpakets gespeichert wird. Dies ist insbesondere bei großen Dateitransfers vorteilhaft, insbesondere wenn die Datei ein großes Softwarepaket ist, eine große Video-Datei, eine Archivdatei, z.B. ein ZIP-File, mit einer großen Anzahl von Bilddaten oder Konstruktionsdaten oder ein Archivdatei mit umfangreichen Lerndaten zum Anlernen eines AI-Modells.

In einer weiteren Weiterbildung der Erfindung erfolgt das Empfangen (insbesondere das Laden) der mindestens einen Dateneinheit von der Datenquelle im Rahmen einer Datenübertragung,
wobei die Datenübertragung während eines Zeitabschnitts erfolgt, wobei der Zeitabschnitt einen Beginn und einen Endzeitpunkt aufweist,
wobei das Ermitteln der mindestens zwei vorläufigen Vertrauenswürdigkeitsinformationen zu Beginn und/oder zu dem Endzeitpunkt erfolgt.

In einer weiteren Weiterbildung der Erfindung erfolgt das Zuordnen der Vertrauenswürdigkeitsinformation zu der mindestens einen Dateneinheit durch:
- ein Verknüpfen der Vertrauenswürdigkeitsinformation und der mindestens einen Dateneinheit,
- ein Bilden eines erweiterten Attributs, vorzugsweise in einem "Alternative Stream" der mindestens einen Dateieinheit, wobei das erweiterte Attribut dem vertrauenswürdigen Datenpaket zugeordnet wird, insbesondere Bestandteil von dem vertrauenswürdigen Datenpaket ist,
- ein Einbetten der Vertrauenswürdigkeitsinformation in die mindestens eine Dateneinheit in Form eines digitalen Wasserzeichens.

Das vertrauenswürdige Datenpaket ist auch als ein vertrauenswürdiges Dateisystem ausführbar, dass die Vertrauenswürdigkeitsinformation und die mindestens einen Dateneinheit aufweist.

Durch das erweiterte Attribut liegt zu der mindestens einen Dateneinheit eine Vertrauenswürdigkeitsinformation der Datenquelle vor, die sich auf den Zeitpunkt bezieht, als die mindestens einen Dateneinheit von der Datenquelle empfangen/geladen wurde.

In einer weiteren Weiterbildung der Erfindung ist die Vertrauenswürdigkeitsinformation ausgebildet als:
- die mindestens eine Integritätsinformation der Datenquelle im Rohdatenformat
- eine Kategorisierung,
- eine Einstufung und/oder
- eine Sicherheitseinstufung.

Es wird somit insbesondere die Rohinformation (Integritätsinformation der Datenquelle) als Vertrauenswürdigkeitsinformation gespeichert.

Alternativ oder zusätzlich wird insbesondere eine Vertrauenswürdigkeitsinformation ermittelt/gebildet, welche eine Kategorisierung, insbesondere eine Einstufung, insbesondere eine Sicherheitseinstufung, angibt. Die Kategorisierung erfolgt insbesondere basierend auf einem vorgebbaren Regelwerk. Die Kategorisierung weist Kategorien auf. Kategorien sind insbesondere "low trust", "medium trust", "high trust" und/oder "untrusted", "enterprise-trust", "OT-trust", "cloud-provider-trust".

In einer weiteren Weiterbildung der Erfindung ist das vertrauenswürdige Datenpaket dafür vorgesehen, dass ein Zugreifen auf das vertrauenswürdige Datenpaket in Abhängigkeit der Vertrauenswürdigkeitsinformation erfolgt.

In einer weiteren Weiterbildung der Erfindung umfasst das Zugreifen:
- Ein Verarbeiten,
- ein Filtern,
- ein Plausibilisieren und/oder
- ein Verwenden.

Die Erfindung ermöglicht, dass eine Applikation auf dem Zielknoten (Empfänger der mindestens einen Dateneinheit), die durch eine App-Ausführungsumgebung (RTE, Runtime Environment) ausgeführt wird, und/oder die App-Ausführungsumgebung selbst, bei einem zu einem späteren Zeitpunkt stattfindenden Zugriff auf die gespeicherten Daten bzw. auf die gespeicherte Datei davon abhängig die Datenverarbeitung anpassen kann (z.B. Daten verwerfen, einer Plausibilisierung unterziehen, einer Datenfilterung unterziehen, einer Malware-Prüfung unterziehen, oder ungeprüft verwenden).

Beispielsweise können bei einem Anlernen eines AI-Modells nur diejenigen Daten als Lerndaten verwendet werden, die von einer als vertrauenswürdig erkannten Quelle stammen.

Auch ist es möglich, die Reihenfolge der Daten bei einem Lernen eines AI-Modells abhängig von deren Vertrauenswürdigkeit zu sortieren (z.B. zuerst Daten lernen, die aus einer vertrauenswürdigen Quelle stammen). Es erfolgt dabei ein "Curriculum Learning" des AI-Modells, wobei die Vertrauenswürdigkeit als ein Ordnungskriterium der Lerndaten verwendet wird.

Weiterhin ist es möglich, dass Abrechnungsdaten oder Verbrauchsdaten nur dann oder nur dann automatisch weiterverarbeitet werden, wenn die Daten von einer Datenquelle stammen, bei der zum Zeitpunkt der Datenübertragung die Geräteintegrität positiv bestätigt war.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein System aufweisend:
- ein Computerprogrammprodukt nach Anspruch 13 und/oder
- ein computerlesbares Medium nach Anspruch 14.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens,
- Fig. 2: eine schematische Darstellung eines erfindungsgemäßen Systems.

### DETAILLIERTE BESCHREIBUNG DER ERFINDUNG

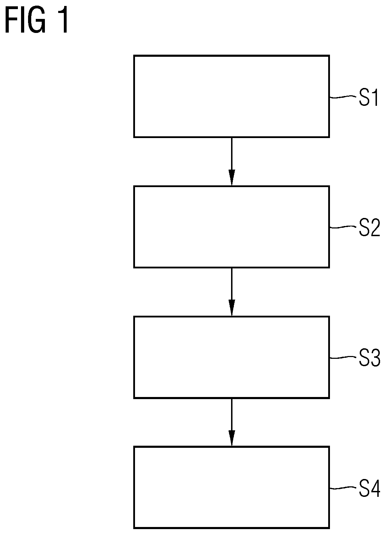

Fig. 1 zeigt ein Ablaufdiagramm des erfindungsgemäßen Verfahrens zum Speichern eines vertrauenswürdigen Datenpakets,
mit den Schritten:
- Schritt S1: Ein Empfangen von einer Datenquelle von:
   o mindestens einer Dateneinheit,
   o mindestens einer Integritätsinformation der Datenquelle, wobei die Integritätsinformation der mindestens einen Dateneinheit zugeordnet ist,
- Schritt S2: Ein Ermitteln einer Vertrauenswürdigkeitsinformation in Abhängigkeit der mindestens einen Integritätsinformation,
- Schritt S3: Ein Erstellen des vertrauenswürdigen Datenpakets durch ein Zuordnen der Vertrauenswürdigkeitsinformation zu der mindestens einen Dateneinheit, und
- Schritt S4: Ein Speichern des vertrauenswürdigen Datenpakets.

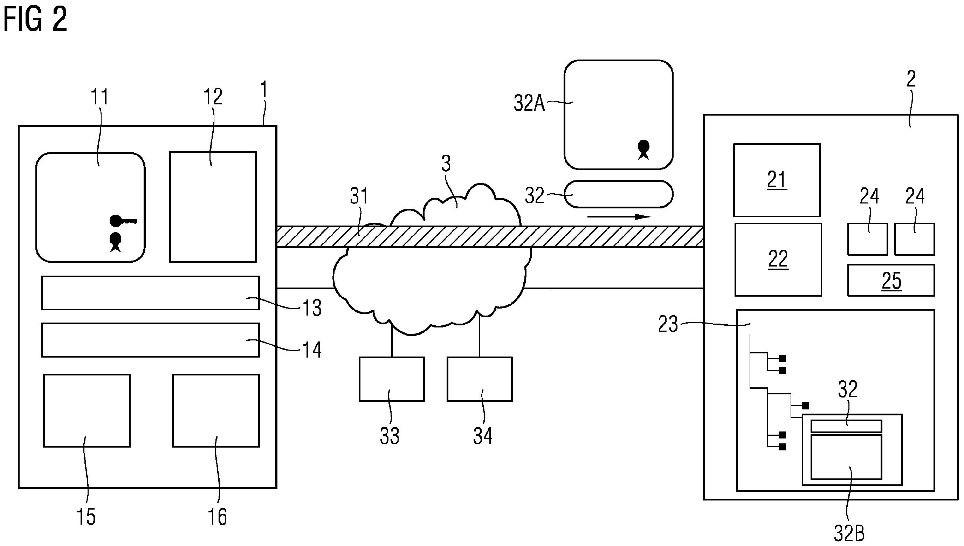

Fig. 2 zeigt ein Ausführungsbeispiel, bei dem Daten 32 aus einer Datenspeichereinheit 13, z.B. eine Datei 32, von einem Ursprungsknoten 1 (auch als Source Node 1 bezeichenbar, insbesondere ein erstes Gerät 1) zu einem Zielknoten 2 (Destination Node 2) über einen authentisierten, kryptographisch geschützten Kommunikationskanal 31 (z.B. TLS, DTLS; QUIC) innerhalb eines Kommunikationsnetzwerks 3 übertragen werden. Der Ursprungsknoten 1 ist mit einer ersten Verbindung 12 mit dem Kommunikationskanal 31 verbunden. Der Zielknoten 2 ist mit einer zweiten Verbindung 21 mit dem Kommunikationskanal 31 verbunden.

Der Ursprungsknoten 1 stellt, zusätzlich zu den Daten 32 und seiner Authentisierungsinformation 11 (auch als "Device Authentication Certificate" 11 bezeichenbar und erstellt durch eine Attestiereinheit 14) eine Vertrauenswürdigkeitsinformation 32A in Form einer kryptographisch geschützte Integritätsbestätigung 32A (auch als "Device Integrity Attestation" 32A bezeichenbar) bereit. Die Integritätsbestätigung 32A umfasst insbesondere eine ID des Ursprungsknoten 1. Insbesondere ist die Integritätsbestätigung 32A durch eine Signatur kryptographisch geschützt.

Die Integritätsinformation 32A kann:
- von einem Runtime-Health-Check-Komponente 16 des ersten Geräts 1, z.B. zur wiederholten Integritätsprüfung der Firmware und der ausgeführten Software des Ursprungsknotens 1 zur Laufzeit, und/oder
- durch eine Root of Trust for Measurement 15, die z.B. beim Gerätehochlauf (Booten) eine Geräteintegritätsinformation 32A ermittelt (z.B. für ein Trusted Platform Module des Ursprungsknoten 1) ermittelt werden.

Der Zielknoten 2, insbesondere ein zweites Gerät 2, speichert die empfangenen Daten 32 in einem Dateisystem 23 ab. Zusätzlich zu den eigentlichen Daten 32 und zu allgemein bekannten Dateiattributen wie Eigentümer und Zugriffsrechten wird eine Vertrauenswürdigkeitsinformation 32B der Datenquelle 1, d.h. des Ursprungsknoten 1, als Dateiattribut oder als "alternative Stream" der Datei 32 abgelegt und zuvor von einer Einheit 22 zu Bestimmung der Vertrauenswürdigkeitsinformation 32B bestimmt.

Alternativ oder zusätzlich kann die Vertrauenswürdigkeitsinformation 32B in Form eines digitalen Wasserzeichens 32B in den Daten 32 der Datei eingebettet werden.

Diese Information zur Vertrauenswürdigkeitsinformation 32B der Datenquelle 1 kann abhängig von der bereitgestellten Geräteintegritätsattestierung 32A des Ursprungsknotens 1 ermittelt werden (z.B. untrusted, enterprise-trust, OT-trust, cloud-provider-trust). Es ist jedoch auch möglich, die erhaltene Integritäts-Rohinformation 32A zu speichern.

Neben der Geräteintegritätsattestierung 32A kann auch:
- eine Information zur Authentisierung des Ursprungsknotens 1, insbesondere sein Authentisierungszertifikat 11, zur Cipher Suite des zur Übertragung der Daten 32 verwendeten Übertragungskanals 31 verwendet werden, oder
- eine Information zum Ursprungsknoten 1, die der Zielknoten 2 von einem Geräte-Directory-System 34 oder von einem Geräte-Management-System 33 bei der Übertragung der Daten abfragen kann.

Eine Applikation 24 (App 24) auf dem Zielknoten 2, die durch eine App-Ausführungsumgebung 25 (RTE 25, Runtime Environment 25) ausgeführt wird, und/oder die App-Ausführungsumgebung 25 selbst, kann Security-Optionen beim Zugriff auf eine gespeicherte Datei 32 abhängig von deren Vertrauenswürdigkeitsinformation 32B der Datenquelle 1anpassen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Speichern eines vertrauenswürdigen Datenpakets (32, 32B),
mit den Schritten:
- Ein Empfangen (S1) von einer Datenquelle (1) von:
o mindestens einer Dateneinheit (32),
o mindestens einer Integritätsinformation (32A) der Datenquelle (1), welche der mindestens einen Dateneinheit (32) zugeordnet ist,
- ein Ermitteln (S2) einer Vertrauenswürdigkeitsinformation (32B) in Abhängigkeit der mindestens einen Integritätsinformation (32A),
- ein Erstellen (S3) des vertrauenswürdigen Datenpakets (32, 32B) durch ein Zuordnen der Vertrauenswürdigkeitsinformation (32B) zu der mindestens einen Dateneinheit (32), und
- ein Speichern (S4) des vertrauenswürdigen Datenpakets (32, 32B).

2. Verfahren nach Anspruch 1,
wobei die Datenquelle (1) ausgebildet ist als:
- ein Sender,
- ein Ursprungsknoten,
- ein Gerät als Ganzes,
- einen Teilbereich eines Geräts,
- eine geschützte Ausführungsumgebung,
- ein Service,
- eine virtuelle Maschine und/oder
- ein Container.

3. Verfahren nach einem der vorhergehenden Ansprüche,
wobei der mindestens einen Dateneinheit außerdem zugeordnet ist:
- eine Authentisierung (11) eines Senders (1) der mindestens einen Dateneinheit,
- eine Authentisierung der Datenquelle (32, 32A),
- ein Authentisierungszertifikat (11),
- ein eine Authentisierung (11) eines der Datenquelle (1) übergeordneten Systems, insbesondere übergeordneten Geräts,
- mindestens ein Dateiattribut und/oder
- eine Zugriffsberechtigung.

4. Verfahren nach einem der vorhergehenden Ansprüche,
wobei die mindestens eine Dateneinheit (32) ausgebildet ist als:
- mindestens eine Datei,
- Lerndaten für eine künstliche Intelligenz,
- Testdaten für eine künstliche Intelligenz,
- eine Softwaredatei,
- ein Softwarepaket,
- Videodaten,
- Archivdaten, insbesondere ZIP-Daten,
- Bilddaten oder
- Konstruktionsdaten,
- Abrechnungsdaten und/oder
- Verbrauchsdaten.

5. Verfahren nach einem der vorhergehenden Ansprüche,
wobei die mindestens eine Integritätsinformation (32A) ausgebildet ist als:
- Eine Geräteintegritätsinformation,
- ein Integritätsinformation einer Firmware, Software und/oder Hardware der Datenquelle und/oder
- eine kryptographisch geschützte Attestierung.

6. Verfahren nach einem der vorhergehenden Ansprüche,
wobei das Ermitteln der Vertrauenswürdigkeitsinformation (32B) durch eine regelbasierte Analyse der mindestens einen Integritätsinformation (32A) erfolgt.

7. Verfahren nach einem der vorhergehenden Ansprüche,
mit dem weiteren Schritt:
- Ein Ermitteln von mindestens zwei vorläufigen Vertrauenswürdigkeitsinformationen aus der mindestens einen Integritätsinformation (32A),
wobei das Erstellen der Vertrauenswürdigkeitsinformation (32B) basierend auf den mindestens zwei vorläufigen Vertrauenswürdigkeitsinformationen erfolgt.

8. Verfahren nach Anspruch 7,
wobei das Empfangen der mindestens eine Dateneinheit (32) von der Datenquelle (1) im Rahmen einer Datenübertragung erfolgt, wobei die Datenübertragung während eines Zeitabschnitts erfolgt, wobei der Zeitabschnitt einen Beginn und einen Endzeitpunkt aufweist,
wobei das Ermitteln der mindestens zwei vorläufigen Vertrauenswürdigkeitsinformationen zu Beginn und/oder zu dem Endzeitpunkt erfolgt.

9. Verfahren nach einem der vorhergehenden Ansprüche,
wobei das Zuordnen der Vertrauenswürdigkeitsinformation (32B) zu der mindestens einen Dateneinheit (32) durch:
- ein Verknüpfen der Vertrauenswürdigkeitsinformation (32B) und der mindestens einen Dateneinheit (32),
- ein Bilden eines erweiterten Attributs, wobei das erweiterte Attribut dem vertrauenswürdigen Datenpaket (32, 32B) zugeordnet wird,
- ein Einbetten der Vertrauenswürdigkeitsinformation (32B) in die mindestens eine Dateneinheit (32) in Form eines digitalen Wasserzeichens
erfolgt.

10. Verfahren nach einem der vorhergehenden Ansprüche,
wobei die Vertrauenswürdigkeitsinformation (32B) ausgebildet ist als:
- die mindestens eine Integritätsinformation (32A) der Datenquelle (1) im Rohdatenformat,
- eine Kategorisierung,
- eine Einstufung und/oder
- eine Sicherheitseinstufung.

11. Verfahren nach einem der vorhergehenden Ansprüche,
wobei das vertrauenswürdige Datenpaket (32, 32B) dafür vorgesehen ist, dass ein Zugreifen auf das vertrauenswürdige Datenpaket (32, 32B) in Abhängigkeit der Vertrauenswürdigkeitsinformation (32B) erfolgt.

12. Verfahren nach Anspruch 11,
wobei das Zugreifen:
- Ein Verarbeiten,
- ein Filtern,
- ein Plausibilisieren und/oder
- ein Verwenden
umfasst.

13. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.

14. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.

15. System aufweisend:
- ein Computerprogrammprodukt nach Anspruch 13 und/oder
- ein computerlesbares Medium nach Anspruch 14.
